# EUROPEAN PATENT SPECIFICATION

(11) **EP 3 253 826 B1**
(45) Date of publication and mention of the grant of the patent: **15.12.2021**
(21) Application number: 16747055.8
(22) Date of filing: 01.02.2016
(51) Int. Cl.: C09C 1/48, C09C 1/56, C01B 3/00

(54) **CARBON BLACK COMBUSTABLE GAS SEPARATION**
RUSSBRENNFÄHIGE GASTRENNUNG
SÉPARATION DE GAZ COMBUSTIBLES CONTENUS DANS DU NOIR DE CARBONE

(30) Priority: 03.02.2015 US 201562111317 P
(43) Date of publication of application: 13.12.2017
(73) Proprietor: Monolith Materials, Inc., Lincoln, Nebraska 68508 (US)
(72) Inventor: TAYLOR, Roscoe W., San Mateo, California 94401 (US); JOHNSON, Peter L., Mountain View, California 94303 (US)
(74) Representative: TLIP Limited
(86) International application number: PCT/US2016/015939
(87) International publication number: WO 2016/126598

(56) References cited:
- WO-A1-2013/185219
- WO-A1-2015/116797
- GB-A- 395 893
- US-A- 3 420 632
- US-A- 4 372 937
- US-A1- 2008 226 538
- US-A1- 2009 155 157
- US-A1- 2009 208 751
- US-A1- 2011 076 608
- US-A1- 2011 076 608
- DATABASE WPI Week 200323 Thomson Scientific, London, GB; AN 2003-239603 XP002781693, -& WO 03/014018 A1 (OSAKA GAS CO LTD) 20 February 2003 (2003-02-20)

## Description

### CROSS-REFERENCE TO RELATED APPLICATION

### TECHNICAL FIELD

The field of art to which this invention generally pertains is methods for making use of energy to effect chemical changes.

### BACKGROUND

There are many processes that can be used and have been used over the years to produce carbon black. The energy sources used to produce such carbon blacks over the years have, in large part, been closely connected to the raw materials used to convert hydrocarbon containing materials into carbon black. Residual refinery oils and natural gas have long been a resource for the production of carbon black. Energy sources have evolved over time in chemical processes such as carbon black production from simple flame, to oil furnace, to plasma, to name a few. As in all manufacturing, there is a constant search for more efficient and effective ways to produce such products. Varying flow rates and other conditions of energy sources, varying flow rates and other conditions of raw materials, increasing speed of production, increasing yields, reducing manufacturing equipment wear characteristics, etc. have all been, and continue to be, part of this search over the years.

The systems described herein meet the challenges described above, and can additionally attain and/or safely enable these more efficient and effective manufacturing processes by dealing with the residual combustible gasses often contained within the carbon black agglomerates produced.
US2011/076608 describes a carbon black, a process of preparation thereof and the use thereof.

### BRIEF SUMMARY

A method of making carbon black is the first aspect of the present invention and is provided in claim 1. Preferred embodiments are provided in the dependent claims. Any embodiments of the disclosure below which are not encompassed by the claims are provided for reference only.

A method of making carbon black in a reactor is described that results in a high concentration of combustible gasses contained in the pores of the carbon black produced, where the combustible gasses contained in the pores are replaced with inert gas to render the carbon black safer to process in downstream equipment. A method of separating combustible gasses from the pores of a carbon black agglomerate production is also described including, discharging the carbon black produced into an upward flowing stream of inert gas causing the combustible gasses contained in pores of the agglomerate to diffuse into the inert gas, while the inert gas diffuses into the pores.

Additional embodiments include: the method described above where the carbon black is made in a plasma process; the method described above where
the combustible gasses are present in an amount greater than 30% by volume on a dry gas basis; the method described above where the combustible gasses are replaced by changes in absolute pressure; the method described above where the combustible gasses are replaced by changes in temperature; the method described above where the inert gas is nitrogen; the method described above where the inert gas is a noble gas; the method described above where the inert gas is steam; the method described above where the inert gas is carbon dioxide; the method described above where the combustible gasses replaced mix with the inert gas used for replacement, and the resulting mixture is used as a fuel; the method described above where the resulting mixture of combustible gases and inert gas is further processed to concentrate the combustible gasses for use as a fuel; the method described above where the resulting mixture of combustible gases and inert gas is further separated into components for use as chemical feedstock; the method described above where the separation of the combustible gasses is obtained by pressure swing adsorption or absorption, vacuum pressure swing adsorption or absorption, temperature swing adsorption or absorption, condensation of the inert gas, molecular sieves or other membranes, or scrubbing; the method described above where the concentration of the combustible gasses is obtained by pressure swing adsorption or absorption, vacuum pressure swing adsorption or absorption, temperature swing adsorption or absorption, condensation of the inert gas, molecular sieves or other membranes, or scrubbing; the method described above where the separation and/or concentration of the combustible gasses is obtained by flowing the gasses through a mass of carbon black to remove the combustible gasses; the method described above where the separation and/or concentration of the combustible gasses is obtained by the utilization of a fluidized bed.

### DETAILED DESCRIPTION

The particulars shown herein are by way of example and for purposes of illustrative discussion of the various embodiments of the present invention only and are presented in the cause of providing what is believed to be the most useful and readily understood description of the principles and conceptual aspects of the invention. In this regard, no attempt is made to show details of the invention in more detail than is necessary for a fundamental understanding of the invention, the description making apparent to those skilled in the art how the several forms of the invention may be embodied in practice.

The present invention will now be described by reference to more detailed embodiments. This invention may, however, be embodied in different forms and should not be construed as limited to the embodiments set forth herein. Rather, these embodiments are provided so that this disclosure will be thorough and complete, and will fully convey the scope of the invention to those skilled in the art.

Unless otherwise defined, all technical and scientific terms used herein have the same meaning as commonly understood by one of ordinary skill in the art to which this invention belongs. The terminology used in the description of the invention herein is for describing particular embodiments only and is not intended to be limiting of the invention. As used in the description of the invention and the appended claims, the singular forms "a," "an," and "the" are intended to include the plural forms as well, unless the context clearly indicates otherwise.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should be construed in light of the number of significant digits and ordinary rounding approaches.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. Every numerical range given throughout this specification will include every narrower numerical range that falls within such broader numerical range, as if such narrower numerical ranges were all expressly written herein.

Additional advantages of the invention will be set forth in part in the description which follows, and in part will be obvious from the description, or may be learned by practice of the invention. It is to be understood that both the foregoing general description and the following detailed description are exemplary and explanatory only and are not restrictive of the invention, as claimed.

Many of carbon black system improvements result in more fuel rich reactor effluent gas streams (often referred to as tail gas). For example oxygen enriched furnace systems can contain higher concentrations of hydrogen and other combustibles, together with lower amounts of nitrogen. For some systems, such as plasma, thermal, acetylene, the resulting gas stream essentially only contains combustible gases. These improved systems often include the separation of the black from the effluent gas stream. The separated black agglomerates will still then contain substantial amounts of the combustible gasses, with no guidance as to how to safely handle the product carbon black once it is separated from the gas stream.

As disclosed herein, a method is described for separating hydrogen and other combustible gasses from the pores of a carbon black agglomerate production stream. It should be noted that the term pores includes not only pores at the surface of the carbon black but interstices within the carbon black aggregates and agglomerates as well. The carbon black is formed in a system of making carbon black which results in the gasses made in forming the carbon black typically containing more than 30% by volume combustible gasses. Such systems can include plasma and other thermal cracking systems, oxygen enriched furnace and other combustion based systems, and other conceivable systems that result in higher combustible gas concentrations in the reactor off gas, e.g. high temperature heating such as solar, resistive and inductive heating. Such processes produce black that is typically filtered, separated with a cyclone, or otherwise separated from the bulk of the reactor off gas (often referred to as tail gas) leaving the pores of the agglomerates full of combustible gasses.

These gasses contained within the products produced can present a significant safety hazard to downstream air processing equipment (classification, milling, pelletisation, drying etc), including up to the potential for explosions and deflagrations. The processes described herein remove such combustible gasses from the pores of the black aggregates and so protect the downstream equipment that processes the black in air or air mixtures.

The combustible gasses can be removed from the pores of the black aggregates by variety of processes as described herein, including varying the pressure or temperature, or discharging the carbon black produced into an upward flowing stream of inert gas causing the combustible gasses contained in pores of the agglomerate to diffuse into the inert gas. The inert gas used to vary the pressure or provide the upward flowing inert gas can be nitrogen, carbon dioxide, steam, a combination of noble gas such as helium, neon argon, krypton, xenon etc., or one noble gas, or combinations of the above. The resulting gas stream that contains the combustible gasses can also be separated from the inert gas, so that the inert gas may be reused to treat more product, and the combustible gas recovered for use as a fuel or for sale of the fuel gas stream or its components.

The combustible gasses entrapped within the pores of carbon black agglomerates produced in a typical plasma torch system and other high intensity carbon black processes, is recovered by counter current flow of nitrogen. The combustible gasses removal can also take place by pressure swing with nitrogen or another inert gas so that each change in pressure, from multiple atmospheres down to a lessor pressure or even a vacuum, displaces the combustible gasses with an inert gas. Other methods can include temperature swings or just leaving the product in filters overnight so that the combustible gasses diffuse out over time.

Pressure swing degassing requires a pressure vessel to contain the change in pressure necessary for the use of a pressure swing. The same is true should the pressure swing use a vacuum instead of or supplemental to the pressure swing. While discontinuous, such pressure swings can take place over a short period of time and so result in conversion of the product in a relatively short period of time. Temperature swings would also effectively displace the pore combustible gasses, but would likely take longer time than pressure swings or counter current methods.

Removal of hydrogen overnight also takes too long for a continuous production process. Flowing gas through a mass of black would also remove the combustible gasses. Additionally the utilization of a fluidized bed could enable the separation of combustible gasses from the carbon black.

The counter current embodiment sets up an upward flowing inert gas that the black falls through. When discharging the black from the main unit filter it is sent into an upward flowing stream of inert gas. As the black falls down through the inert gas the hydrogen will diffuse out of the pores of the agglomerate into the inert gas. The buoyancy of the hydrogen and other combustible gasses will assist with this process. This embodiment should result in the least use of nitrogen/inert gas, the highest concentration of combustible gasses in the evolved gas stream from this process, and complete the process continuously.

The mixture of inert gas and combustible gasses produced by this process can also receive additional processing to separate or concentrate the combustible gasses. This processing would then increase the sales value of the combustible gasses and may enable separating the combustible gasses into various components that could then also use as chemical feedstocks. These methods include molecular sieves pressure and vacuum pressure swing adsorption, condensation of the inert gas, and or scrubbing. The inert gas removed (or remaining) may also then be suitable for reuse in combustible gas removal from the black.

### EXAMPLE

A plasma black as made is filtered into a vessel where most of the effluent gasses have passed through the filter. The pores of the plasma black are filled with combustible gasses in such a quantity that >80% of the volume of the black is filled with hydrogen. A 200 kg (kilogram) process sample of black, despite the carbon having a density of ~1800 kg/m³ (meters³), will have a pour density of approximately 50-200 kg/m³ in the vessel, and so there is up to approximately 3.9 m³ of combustible gasses in the pores of the black that occupies up to 4 m³ of vessel volume. These gasses are subjected to a nitrogen pressure swing such that the nitrogen is purged into the system at a pressure of 5 bar (or higher). The gasses are then released and the gases contained in the pores would now constitute 80% nitrogen and 20% hydrogen. Repeating this process then results in a similar 80% reduction in the hydrogen concentration in the pores, so that after multiple cycles the hydrogen has been substantially replaced by nitrogen rendering the pore gasses inert. For this example, 3 degas iterations were run at a pressure of 5 bar to reduce the amount of combustible gasses remaining in the pores to less than 1% hydrogen by volume. The flammability limit for hydrogen in nitrogen is 5.5%.

Thus, the scope of the invention shall include all modifications and variations that may fall within the scope of the attached claims. Other embodiments of the invention will be apparent to those skilled in the art from consideration of the specification and practice of the invention disclosed herein. It is intended that the specification and examples be considered as exemplary only.

## Claims

1. A method of making carbon black, comprising:
(a) generating the carbon black in a reactor, wherein the carbon black comprises pores containing combustible gasses, wherein the combustible gasses are present in an amount greater than 30% by volume on a dry gas basis, and wherein the combustible gasses include hydrogen; and
(b) directing an inert gas to the carbon black to replace the combustible gasses contained in the pores with the inert gas to yield a reduced concentration of the combustible gasses in the pores of the carbon black, and optionally wherein the reduced concentration of the combustible gasses is below a flammability limit of the combustible gasses.

2. The method of claim 1, wherein the carbon black is generated in a plasma process.

3. The method of claim 1, further comprising discharging the carbon black into an upward flowing stream of the inert gas to cause the combustible gasses contained in the pores to diffuse into the inert gas, while the inert gas diffuses into the pores.

4. The method of claim 1, wherein the combustible gasses are replaced by the inert gas by changes in absolute pressure.

5. The method of claim 1, wherein the combustible gasses are replaced by the inert gas by changes in temperature.

6. The method of claim 1, wherein the inert gas is nitrogen.

7. The method of claim 1, wherein the inert gas is a noble gas.

8. The method of claim 1, wherein the inert gas is steam.

9. The method of claim 1, wherein the inert gas is carbon dioxide.

10. The method of claim 1, further comprising mixing the combustible gasses with the inert gas to form a mixture, wherein the resulting mixture is suitable for use as a fuel.

11. The method of claim 10, wherein the mixture is further processed to concentrate the combustible gasses for use as another fuel.

12. The method of claim 10, wherein the mixture is further separated into components for use as chemical feedstocks.

13. The method of claim 11, wherein concentration of the combustible gasses is obtained by pressure swing adsorption or absorption, vacuum pressure swing adsorption or absorption, temperature swing adsorption or absorption, condensation of the inert gas, molecular sieves or other membranes, or scrubbing.

14. The method of claim 12, wherein separation of the combustible gasses is obtained by pressure swing adsorption or absorption, vacuum pressure swing adsorption or absorption, temperature swing adsorption or absorption, condensation of the inert gas, molecular sieves or other membranes, or scrubbing.

15. The method of claim 11 or 12, wherein separation or concentration of the combustible gasses is obtained by flowing the mixture through a mass of carbon black to remove the combustible gasses.

16. The method of claim 11 or 12, wherein separation or concentration of the combustible gasses is obtained by utilization of a fluidized bed.

## Patentansprüche

1. Verfahren zum Herstellen von Ruß, umfassend:
(a) Erzeugen des Rußes in einem Reaktor, wobei der Ruß Poren umfasst, die brennbare Gase enthalten, wobei die brennbaren Gase in einer Menge von mehr als 30 Vol.-% auf Trockengasbasis vorhanden sind und wobei die brennbaren Gase Wasserstoff beinhalten; und
(b) Leiten eines Inertgases zu dem Ruß, um die in den Poren enthaltenen brennbaren Gase durch das Inertgas zu ersetzen, um eine verringerte Konzentration der brennbaren Gase in den Poren des Rußes zu erhalten, und wobei optional die verringerte Konzentration der brennbaren Gase unter einer Entzündbarkeitsgrenze der brennbaren Gase liegt.

2. Verfahren nach Anspruch 1, wobei der Ruß in einem Plasmaprozess erzeugt wird.

3. Verfahren nach Anspruch 1, ferner umfassend Abgeben des Rußes in eine nach oben strömende Strömung des Inertgases, um zu bewirken, dass die in den Poren enthaltenen brennbaren Gase in das Inertgas diffundieren, während das Inertgas in die Poren diffundiert.

4. Verfahren nach Anspruch 1, wobei die brennbaren Gase durch Änderungen des Absolutdrucks durch das Inertgas ersetzt werden.

5. Verfahren nach Anspruch 1, wobei die brennbaren Gase durch Änderungen der Temperatur durch das Inertgas ersetzt werden.

6. Verfahren nach Anspruch 1, wobei das Inertgas Stickstoff ist.

7. Verfahren nach Anspruch 1, wobei das Inertgas ein Edelgas ist.

8. Verfahren nach Anspruch 1, wobei das Inertgas Dampf ist.

9. Verfahren nach Anspruch 1, wobei das Inertgas Kohlendioxid ist.

10. Verfahren nach Anspruch 1, ferner umfassend Mischen der brennbaren Gase mit dem Inertgas, um ein Gemisch zu bilden, wobei das resultierende Gemisch zur Verwendung als Brennstoff geeignet ist.

11. Verfahren nach Anspruch 10, wobei das Gemisch ferner verarbeitet wird, um die brennbaren Gase zur Verwendung als ein anderer Brennstoff zu konzentrieren.

12. Verfahren nach Anspruch 10, wobei das Gemisch ferner in Komponenten zur Verwendung als chemische Einsatzstoffe aufgetrennt wird.

13. Verfahren nach Anspruch 11, wobei die Konzentration der brennbaren Gase durch Druckwechsel-Adsorption oder -Absorption, Vakuumdruckwechsel-Adsorption oder - Absorption, Temperaturwechsel-Adsorption oder -Absorption, Kondensation des Inertgases, Molekularsiebe oder andere Membranen oder Waschen erfolgt.

14. Verfahren nach Anspruch 12, wobei die Auftrennung der brennbaren Gase durch Druckwechsel-Adsorption oder -Absorption, Vakuumdruckwechsel-Adsorption oder - Absorption, Temperaturwechsel-Adsorption oder -Absorption, Kondensation des Inertgases, Molekularsiebe oder andere Membranen oder Waschen erfolgt.

15. Verfahren nach Anspruch 11 oder 12, wobei die Auftrennung oder Konzentration der brennbaren Gase dadurch erfolgt, dass das Gemisch durch eine Rußmasse geleitet wird, um die brennbaren Gase zu entfernen.

16. Verfahren nach Anspruch 11 oder 12, wobei die Auftrennung oder Konzentration der brennbaren Gase durch Nutzung einer Wirbelschicht erfolgt.

## Revendications

1. Procédé de fabrication de noir de carbone, comprenant :
(a) la génération du noir de carbone dans un réacteur, dans lequel le noir de carbone comprend des pores contenant des gaz combustibles, dans lequel les gaz combustibles sont présents en une quantité supérieure à 30 % en volume sur une base de gaz sec, et dans lequel les gaz combustibles comprennent de l'hydrogène ; et
(b) le guidage d'un gaz inerte vers le noir de carbone pour remplacer les gaz combustibles contenus dans les pores par le gaz inerte pour produire une concentration réduite des gaz combustibles dans les pores du noir de carbone, et optionnellement dans lequel la concentration réduite des gaz combustibles est inférieure à une limite d'inflammabilité des gaz combustibles.

2. Procédé selon la revendication 1, dans lequel le noir de carbone est généré dans un procédé au plasma.

3. Procédé selon la revendication 1, comprenant en outre l'évacuation du noir de carbone dans un courant ascendant du gaz inerte pour provoquer la diffusion des gaz combustibles contenus dans les pores dans le gaz inerte, tandis que le gaz inerte se diffuse dans les pores.

4. Procédé selon la revendication 1, dans lequel les gaz combustibles sont remplacés par le gaz inerte par des variations de pression absolue.

5. Procédé selon la revendication 1, dans lequel les gaz combustibles sont remplacés par le gaz inerte par des variations de température.

6. Procédé selon la revendication 1, dans lequel le gaz inerte est de l'azote.

7. Procédé selon la revendication 1, dans lequel le gaz inerte est un gaz noble.

8. Procédé selon la revendication 1, dans lequel le gaz inerte est de la vapeur.

9. Procédé selon la revendication 1, dans lequel le gaz inerte est du dioxyde de carbone.

10. Procédé selon la revendication 1, comprenant en outre le mélange des gaz combustibles avec le gaz inerte pour former un mélange, dans lequel le mélange résultant est approprié pour être utilisé comme carburant.

11. Procédé selon la revendication 10, dans lequel le mélange est en outre traité pour concentrer les gaz combustibles à utiliser comme autre carburant.

12. Procédé selon la revendication 10, dans lequel le mélange est en outre séparé en composants destinés à être utilisés comme matières premières chimiques.

13. Procédé selon la revendication 11, dans lequel la concentration des gaz combustibles est obtenue par absorption ou adsorption modulée en pression, absorption ou adsorption modulée en pression sous vide, absorption ou adsorption modulée en température, condensation du gaz inerte, tamis moléculaire ou autres membranes, ou épuration.

14. Procédé selon la revendication 12, dans lequel la séparation des gaz combustibles est obtenue par absorption ou adsorption modulée en pression, absorption ou adsorption modulée en pression sous vide, absorption ou adsorption modulée en température, condensation du gaz inerte, tamis moléculaire ou autres membranes, ou épuration.

15. Procédé selon la revendication 11 ou 12, dans lequel la séparation ou la concentration des gaz combustibles est obtenue en faisant couler le mélange à travers une masse de noir de carbone pour éliminer les gaz combustibles.

16. Procédé selon la revendication 11 ou 12, dans lequel la séparation ou la concentration des gaz combustibles est obtenue par utilisation d'un lit fluidisé.
